# EUROPEAN PATENT SPECIFICATION

(11) **EP 2 068 246 B1**
(45) Date of publication and mention of the grant of the patent: **19.06.2013**
(21) Application number: 08011963.9
(22) Date of filing: 02.07.2008
(51) Int. Cl.: G06F 11/14

(54) **Auto repair method of system configurations using single key control**
Selbstreparaturverfahren eines Konfigurationssystems mit einem einzigen Tastendruck
Procédé de réparation automatique de configurations de système utilisant un contrôle de clé unique

(30) Priority: 30.11.2007 TW 96145803
(43) Date of publication of application: 10.06.2009
(73) Proprietor: Giga-Byte Technology Co., Ltd., Taipei 231 (TW)
(72) Inventor: Lin, Hou-Yuan, Hsin-Tien Tapei County (TW); Chen, Chen-Shun, Hsin-Tien Tapei County (TW)
(74) Representative: Schwerbrock, Florian

(56) References cited:
- US-A- 5 398 333
- US-A- 5 754 798
- US-A1- 2002 162 052
- US-A1- 2006 064 571
- US-B1- 6 253 319
- US-B1- 6 647 512

## Description

### BACKGROUND OF THE INVENTION

### Field of Invention

The present invention relates to a method of updating/restoring system configurations, and more particularly to a method of updating/restoring system configurations using a single key control.

### Related Art

The basic input/output system (BIOS) is a software program code stored in a chip and loaded/executed when a computer is powered on. The BIOS provides a power on self test (POST) procedure required by the computer when powered on, so as to check if the CPU and controllers or registers of the computer work normally, and to initialize the memory, mainboard chip, graphic card, and various peripheral devices in the computer system. The initialization operations include creating an interrupt vector, setting a register, initializing and testing system hardware equipments, and providing various resident programs to be called by an operating system or application program. With the growing demands for computers, computer hardware such as CPU, memory, and peripheral devices like graphic cards are continuously upgraded, so as to improve the working efficiency of the computer with the high performance hardware. In addition, the working efficiency of the computer can also be improved by updating the BIOS (program) and modifying parameters in the BIOS for controlling the operating frequency of the computer hardware.

In some updating methods, the BIOS chip is removed from the mainboard, and a specific device is used to update/write a new BIOS or set operating parameters. These updating methods are rather time and labor consuming. The computer case must be opened with efforts to remove the BIOS chip from the mainboard, and the BIOS chip must be installed in the mainboard again after updating. The detaching and installation of the BIOS chip may increase the probability of damaging the BIOS chip pin. Further, after the electrically erasable programmable read-only memory (EEP ROM) is put forward, the BIOS chip can be updated without being detached from the mainboard. However, when the system cannot be booted or the booting is instable due to the improper overfrequency or overvoltage, the initial settings must be restored. Then, the user still has to open the case to adjust the CMOS clear jumper, so as to clear the CMOS data for setting relevant default values. Therefore, it is still inconvenient and complicated for the user.

US 6,647,512 B1 describes a method for restoring CMOS in a jumperless system. According to a method for restoring a computer CMOS memory, a user, suspecting that the computer is failing to boot because of an incorrect CMOS parameter, presses and holds a power button for four seconds. This may be done while the computer is trapped in a power-on self test (POST). Alternatively, this may be done just after the computer is turned on from a "soft-off" state, but before it has exited the POST. In either case, a "POST in progress" bit will be set, and a "Power Button Override" bit will be set, and the computer will be returned to the "soft-off" power state. These bits may be provided in power control registers in the south bridge. Then, the user presses the power button momentarily to turn the computer back on. The computer will automatically restore the CMOS parameters from a backup copy in response to the "Power Button Override" and "POST in progress" bits being set.

US 2002/0162052 A1 describes a method for entering system firmware recovery mode using software-detectable buttons. Herein, a firmware recovery method comprises steps of detecting the status of one or more buttons, such as the power-on button at an power-on status of the computer system, distinguishing between use of the power button as a power or sleep button and as a firmware recovery button, and initiating recovery of the system firmware, if the power button is used as a recovery button. If the recovery is initiated, it is either attempted to re-program the flash memory by way of a floppy disc or an input/output port, or by resetting system configuration variables, or both. In one example, holding the power button for three seconds, generates a beep, and then releasing the power button provides an indication to the firmware to initiate recovery.

US 5,398,333 A describes a personal computer employing reset button to enter ROM-based diagnostics. Herein, when a reset button is initially pressed, the system enters a CPU reset state. From the CPU reset state, the system initializes a timeout counter in step, performed by executing an interception and timing routine located in ROM BIOS. As part of that routine, the system enters a millisecond time-out loop that tests for reset button being pressed. If reset button is pressed within this 200 millisecond loop, the ROM-based diagnostic program is engaged. If reset button is not pressed within this 200 millisecond loop, the system simply continues on to execute normal BIOS power-on self test and system operation. From a hardware perspective, reset button is a debounced switch. Thus, reset button provides a single pulse from a down and up press. When reset button is pressed, a non-maskable interrupt is sent to CPU. An I/O bit is set and a 10 ms hardware delay is initiated. The reset, if it happens, is detected by a bus controller in the system. The bus controller then signals the various system components to reset by activating a hard reset line to the majority of the hardware components in the system.

US 6.253,319 B1 describes a method and an apparatus for restoring a computer to a clear CMOS configuration. A computer system is provided with a multifunction power switch. In addition to the normal function of turning the computer on and off, the power switch has the additional function of clearing CMOS memory. In one embodiment, pressing the power switch while the computer is connected to a power source turns the computer on and off, and when the computer is disconnected from the power source, the CMOS memory may be cleared by pressing and holding the power switch for a predetermined time delay, e.g. 10 seconds.

### SUMMARY OF THE INVENTION

In view of the above problems of complex steps and inconvenience of updating/restoring the BIOS, it is an object of the present invention to provide an auto repair method of system configuration using single key control, which enables an easy maintenance of a computer system.

This object is solved by a method of claim 1. Further advantages, refinements and embodiments of the invention are described in the respective sub-claims.

It is an advantage of the present invention that maintenance items of the BIOS are performed correspondingly according to different press modes of the power key, so as to solve the problems of the complex steps and inconvenience of updating/restoring the BIOS.

In order to achieve the above objective, an auto repair method of system configurations using single key control is provided. The method includes the following steps. First, a press mode of a power key is detected. Next, a repair item represented by the press mode is determined. Then, a corresponding BIOS repair procedure is executed according to the repair item. Thereafter, a normal booting process is executed.

In the auto repair method of system configurations using single key control according to a preferred embodiment of the present invention, the press mode is a press manner selected from times of pressing the power key, period of pressing the power key each time, and a combination of press times, press period, and interval between two presses. After the press mode of the power key is determined, the corresponding procedure of repairing BIOS system configurations is determined.

In the auto repair method of system configurations using single key control according to a preferred embodiment of the present invention, the corresponding procedure of repairing BIOS system configurations includes a procedure of clearing the CMOS storage data, a procedure of restoring the initial BIOS system configuration settings, and a procedure of overwriting the BIOS program. If the detected press mode of the power key is not one of the predetermined press modes, i.e., the repair item represented by the detected press mode cannot be identified, and the BIOS system configurations cannot be repaired, a normal booting process is executed directly.

In view of the above, in the auto repair method of system configurations using single key control provided by the present invention, corresponding relationships between a variety of press modes (i.e., press manners of the power key) and the repair items are predetermined. When the power key is pressed, a repair item corresponding to the press mode is determined and a corresponding procedure is executed, so as to achieve the purpose of automatically updating/restoring the BIOS system or setting/maintaining relevant parameters of the BIOS system without disassembling the case to take out the BIOS chip, and thus the computer system is easy to maintain.

### BRIEF DESCRIPTION OF THE DRAWINGS

The present invention will become more fully understood from the detailed description given herein below for illustration only, and thus are not limitative of the present invention, and wherein:
FIG. 1 is a flow chart of an auto repair method of system configurations using single key control;
FIG. 2 is a schematic view of a system for performing the auto repair method of system configurations using single key control; and
FIG. 3 is a schematic view illustrating a jumper controller connected to a CMOS storage.

### DETAILED DESCRIPTION OF THE INVENTION

The objectives and implementing methods of the present invention will be illustrated in detail in the following preferred embodiments. However, the concept of the present invention can also be applied to other scopes. The following embodiments are only used for illustrating the objectives and implementing methods of the present invention only, and are not intended to limit the scope of the present invention.

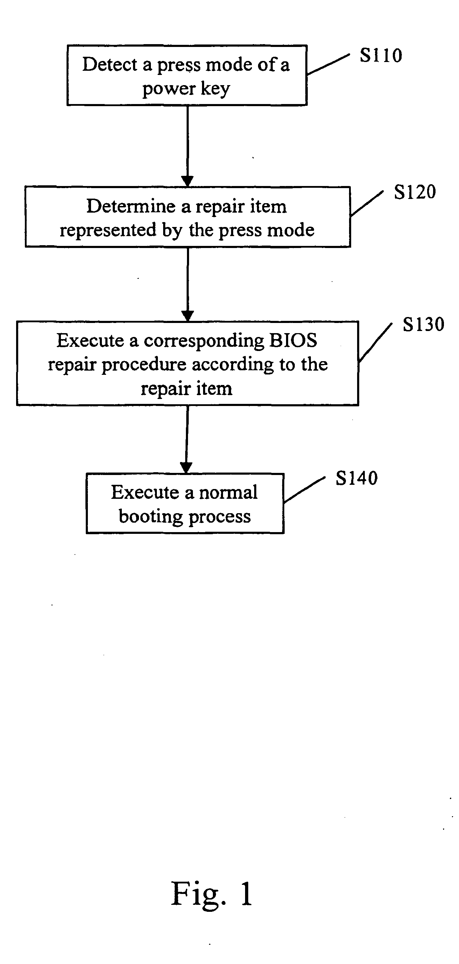

The auto repair method of system configurations using single key control of the present invention (this method below for short) is performed by a repair function control chip embedded in the mainboard. In the preferred embodiment, for example, this method is used to set/restore a BIOS program, or set/restore the BIOS system configuration settings, or clear BIOS-related system configuration settings recorded in a CMOS storage. When a user updates the BIOS (program) or alters a working frequency (overfrequency, overvoltage) of the mainboard, if the program update or the mainboard setting modification fails, the system becomes instable or even the system cannot be booted. At this time, by the use of the present invention, it is not required to disassemble the case to take out the BIOS chip, and also it is unnecessary to update the BIOS through a complicated process to restore the computer system. FIG. 1 is a flow chart of an auto repair method of system configurations using single key control. Referring to FIG. 1, in a preferred embodiment, this method includes the following steps. First, a press mode of a power key is detected (Step S 110). Next, a repair item represented by the press mode is determined (Step S 120). Then, a corresponding BIOS repair procedure is executed according to the repair item (Step S 130). Thereafter, a normal booting process is executed (Step S 140).

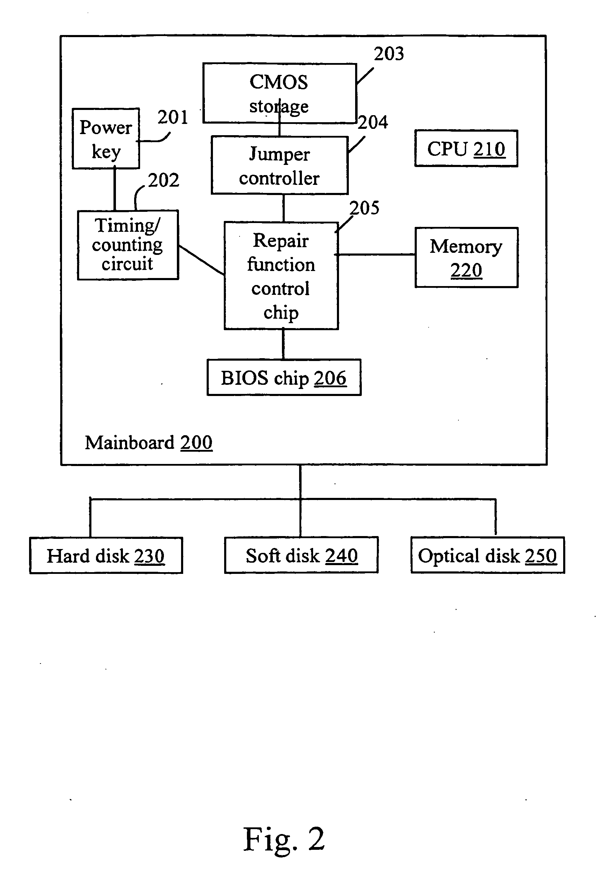

In order to clarify this method, a schematic view of a system for performing the auto repair method of system configurations using single key control is illustrated (as shown in FIG. 2). Referring to FIG. 2, in this embodiment, the system for performing this method includes a host constituted by a mainboard 200, a CPU 210, a memory 220, a hard disk 230, a soft disk 240, and an optical disk 250. Besides, a timing/counting circuit 202, a CMOS storage 203, a jumper controller 204, a repair function control chip 205, and a BIOS chip 206 are embedded in the mainboard. A BIOS master program is stored in the BIOS chip 206, which is read by the BIOS chip 206 when the power key 201 is pressed to perform a normal booting procedure, and then loaded and executed in the memory 220. Different from a conventional BIOS system, in the present invention, before the mainboard is delivered out of the factory, corresponding relationships between the press modes and the repair items of the power key 201 are set in the repair function control chip 205, and the procedures of repairing system configurations (especially, the system configurations of the BIOS system) executed by the repair items are recorded into the same chip 205.

The aforementioned press modes are a combination of times and periods of pressing the power key 201 by the user. For example, "press the power key 201 three times after pressing and holding the power key for several seconds" is a press mode. The timing/counting circuit 202 detects the press times and press periods of the power key 201, so as to determine the press mode. The timing/counting circuit 202 is constituted by an oscillator and simple operation chips embedded in the mainboard. One end of the timing/counting circuit 202 is connected to the power key 201, and the other end is connected to the repair function control chip. Thus, when the power key 201 is pressed, the press times and press periods of the power key 201 may be calculated by counting the circuit conduction times and periods, and the detected press mode is transmitted to the repair function control chip 205.

In this preferred embodiment, the press modes and the corresponding repair items, and procedures of repairing system configurations are illustrated as follows.

When the press mode is to press the power key 201 once after pressing and holding the power key 201 for 3 seconds, the system configuration data in the CMOS storage is cleared. The system configuration data in the CMOS storage is cleared by the following steps. A data clear signal is transmitted by the repair function control chip 205 to the jumper controller 204, and a control voltage is transmitted by the jumper controller 204 to disconnect a data save pin of the CMOS storage, and to enable a data clear pin, so as to clear BIOS-related system configuration settings stored in the CMOS storage.

When the press mode is to press the power key 201 twice after pressing and holding the power key 201 for 3 seconds, the initial BIOS system configuration settings are restored. The initial BIOS system configuration settings are restored by the following steps. The BIOS parameters are captured from a storage position where the initial BIOS parameters (i.e., BIOS configurations) are stored. The storage position may be a storage space in the BIOS chip 206, or a storage space in the memory 220, the hard disk 230, the soft disk 240, or even the optical disk 250, and is not limited herein. Next, the current BIOS system parameters are overwritten with the captured initial BIOS system parameters. Thereafter, the computer is rebooted to restore the initial system configuration settings.

When the press mode is to press the power key 201 three times after pressing and holding the power key 201 for 3 seconds, the BIOS program is overwritten. The BIOS program is overwritten by the following steps. First, an initial BIOS program is captured from the above storage position. Next, a current BIOS program is overwritten with the initial BIOS program (i.e., overwriting the current BIOS program storing position with the initial BIOS program). Thereafter, the computer is rebooted. At this time, the loaded BIOS program is the initial BIOS program. A mainboard supporting dual BIOS usually has two BIOS programs. When the BIOS program in use is damaged, the BIOS program is recovered by only overwriting the current BIOS program with the initial BIOS program. However, as for those mainboards that do not support the dual BIOS, when the computer is booted for the first time, the BIOS program is backed up to any storage position, for saving the initial BIOS program.

Accordingly, when the computer is unable to be booted normally, the user presses the power key 201 once after pressing and holding the power key 201 for 3 seconds, so as to clear the system configurations stored in the CMOS storage. Similarly, the user presses the power key 201 three times after pressing and holding the power key 201 for 3 seconds, thus overwriting the BIOS program. However, if the press mode of the power key 201 is not in the preset range (i.e., it is unable to determine the repair item represented by the press mode), a normal booting process is directly executed. Further, the CMOS storage data may not be cleared until the computer is powered off. However, the initial BIOS parameter settings may be restored and the BIOS program may be overwritten when the computer is powered on.

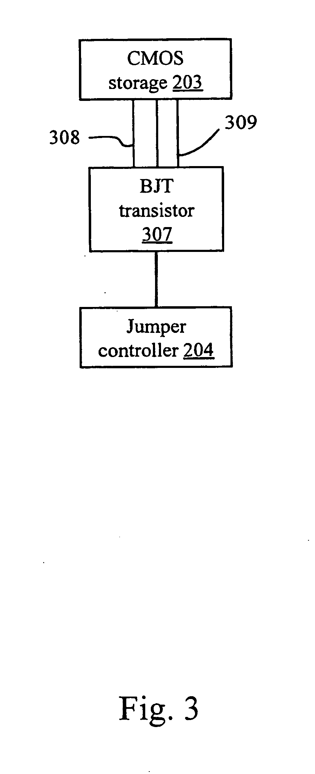

Accordingly, the CMOS storage enables the data clear pin to clear the BIOS-related system configuration settings stored in the CMOS storage. FIG. 3 is a schematic view illustrating a jumper controller connected to a CMOS storage. Referring to FIG. 3, in this embodiment, for example, a BJT transistor 307 is connected to a data save pin 308 and a data clear pin 309 of the CMOS storage 203. When the computer is powered on, the jumper controller 204 transmits a forward bias to turn on the data save pin 308. At this time, the data clear pin 309 is connected, but not electrically connected to the jumper controller. When the jumper controller 204 transmits a reverse bias, the data save pin 308 is disconnected, and the data clear pin 309 is electrically connected (i.e., the data clear pin 309 is enabled). After the data clear pin 309 is enabled, the BIOS-related system configuration settings stored in the CMOS storage 203 are cleared. In this embodiment, the BJT transistor is used to enable the data clear pin 309 through a control voltage (a forward/reverse bias), so as to release the data in the CMOS storage 203 without disassembling the case. The present invention is not limited to the above embodiment, and any other embodiment in which the data clear pin 309 is enabled by an element through a control voltage so as to release the data in the CMOS storage 203 could be employed without departing from the scope of the present invention as defined in the appended claims.

In view of the above, the present invention of automatically performing updating/restoring procedures on a BIOS by press a power key in various press modes has the following advantages.
1. The complicated process is not required, and the BIOS system configurations or BIOS system master programs in a computer can be updated by only press a key.
2. The BIOS program can be updated and the system configuration data in the CMOS storage can be cleared easily without disassembling the computer host device.

## Claims

1. An auto repair method of system configurations using single key control, for setting/restoring parameter settings of system configuration, so as to ensure a normal booting of a computer, the method comprising:
- detecting (S110) a press mode of a power key (201);
- determining (S120) a repair item represented by the press mode;
- executing (S130) a corresponding system configuration repair procedure according to the repair item; and
- executing (S140) a normal booting process;
wherein when the press mode is to press the power key (201) once after pressing and holding the power key for 3 seconds the system configuration repair procedure is to clear CMOS storage data recording system configuration settings
when the press mode is to press the power key twice after pressing and holding the power key for 3 seconds, the system configuration repair procedure is to restore initial system configuration settings of a basic input/output system (BIOS); and
when the press mode is to press the power key three times after pressing and holding the power key for 3 seconds, the system configuration repair procedure is to overwrite a BIOS program;
wherein the operation of clearing CMOS storage data further comprises
- transmitting a data clear signal by a functional controller to a jumper controller (204); and
- transmitting a control voltage by the jumper controller (204) to disconnect a data save pin (308) of the CMOS storage (203), and enable a data clear pin (309).

2. The auto repair method of system configurations using single key control as claimed in claim 1, wherein the press mode is a press manner selected from any one of press times and press periods of the power key (201).

3. The auto repair method of system configurations using single key control as claimed in claim 2, wherein the press times and the press periods are detected by a timing/counting circuit (202).

4. The auto repair method of system configurations using single key control as claimed in claim 1, wherein the operation of restoring initial BIOS system configuration settings comprises:
- capturing initial system configurations from a storage position;
- overwriting current system configuration settings with the initial system configuration settings; and
- rebooting the computer.

5. The auto repair method of system configurations using single key control as claimed in claim 1, wherein the operation of overwriting a BIOS program comprises:
- capturing an initial BIOS program from a storage position;
- overwriting a current BIOS program with the initial BIOS program; and
- rebooting the computer.

6. The auto repair method of system configurations using single key control as claimed in claim 1, further comprising directly executing the normal booting process if the repair item is unable to be determined according to the press mode of the power key (201).

## Patentansprüche

1. Eine automatische Reparaturmethode der Systemkonfigurationen durch eine einzige Taste, für die Einstellung/Wiederherstellung der Parametereinstellungen des Systems zur Gewährleistung des normalen Starten des Computers. Es umfasst:
- Erkennung (S110) einer einzigen Weise zum Drücken der Starttaste (201);
- Bestimmung (S120) eines Reparaturartikels vertreten durch die Drückenweise;
- Durchführung (S130) eines Reparaturverfahrens entsprechend der Systemkonfiguration, laut dem Reparaturartikel; und
- Durchführung (S 140) eines normalen Startverfahrens;
Wenn die Druckweise das Drücken der Starttaste (201) Einmal nach dem Drücken und Halten der Starttaste für 3 Sekunden vorsieht, ist das Reparaturverfahren der Systemkonfiguration die ursprünglichen Daten aus dem CMOS Speicher zu löschen;
Wenn die Druckweise das Drücken der Starttaste (201) zweimal nach dem Drücken und Halten der Starttaste für 3 Sekunden vorsieht, ist das Reparaturverfahren der Systemkonfiguration die ursprünglichen Daten der Konfigurationaus einem Grundeingang/Ausgangsystem zu löschen (BIOS);
und
Wenn die Druckweise das Drücken der Starttaste dreimal nach dem Drücken und Halten der Starttaste für 3 Sekunden vorsieht, überschreibt das Reparaturverfahren der Systemkonfiguration ein BIOS Programm;
Das Löschen der Dateien aus dem CMOS Speicher umfasst:
- Die Übertragung eines deutlichen Datensignals durch ein funktionelles Steuergerät nach einem Verbindungssteuergerät (204); und
- Übertragung einer Kontrollspannung durch das Verbindungsteuergerät (204) für Ausschalten eines Datenspeicherungspins (308) des CMOS Speichers (203) und zur Aktivierung eines Datenlöschpins (309).

2. Die automatische Reparaturmethode der Systemkonfigurationen verwendet einzige Steuertasten, laut 1. Abruf, wobei die Druckweise ein Druckverfahren bestehend aus beliebigen Druckzahl und Druckzeiten der Starttasten (201) ist.

3. Die automatische Reparaturmethode der Systemkonfigurationen verwendet einzige Steuertasten, laut 1. Abruf, wobei die Druckweise ein Druckverfahren bestehend aus Zeitgeber/Zahlschaltung (202) besteht.

4. Die automatische Reparaturmethode der Systemkonfigurationen verwendet einzige Steuertasten, laut 1. Abruf, wobei die Wiederherstellung der ursprünglichen Einstellungen der Systemkonfiguration BIOS umfasst:
- Erfassung der ursprünglichen Systemkonfigurationen aus Speicherungsstelle;
- Überschreiben der laufenden Einstellung der Systemkonfiguration durch die ursprünglichen Einstellungen; und
- Wiederstarten des Computers.

5. Die automatische Reparaturmethode der Systemkonfigurationen verwendet einzige Steuertasten, laut 1. Abruf, wobei das Überschreiben eines BIOS Programms umfasst:
- Erfassung der ursprünglichen BIOS-Programmes aus Speicherungsstelle;
- Überschreiben eines BIOS Programms durch das ursprüngliche BIOS Programm; und
- Wiederstarten des Computers

6. Die automatische Reparaturmethode der Systemkonfigurationen verwendet einzige Steuertasten, laut 1. Abruf, wobei diese auch die direkte Erzielung des normalen Startverfahrens, in dem der zu reparierende Artikel laut der Druckweise der Starttaste(201) nicht bestimmt werden kann, umfasst.

## Revendications

1. Une méthode de réparation automatique des configurations de système utilisant le contrôle par l'intermédiaire d'un seul touche, pour le réglage/restauration des réglages des paramètres de la configuration du système, afin de garantir le démarrage normale de l'ordinateur, la méthode comprenant:
- la détection (S110) d'une mode poussoir de la touche de démarrage (201);
- la détermination (S 120) d'un article qui nécessite la réparation représentée par le mode poussoir;
- la réalisation (S 130) d'une procédure de réparation correspondante à la configuration du système selon l'article qui nécessite la réparation; et
- la réalisation (S 140) d'un processus de démarrage normale;
où lorsque le mode poussoir est d'appuyer sur la touche de démarrage (201) une fois après avoir appuyé et maintenu la touche de démarrage pendant 3 secondes, la procédure de réparation de la configuration du système est d'éliminer les données de stockage CMOS;
lorsque le mode poussoir est d'appuyer sur la touche de démarrage deux fois après avoir appuyé et maintenu le la touche de démarrage pendant 3 secondes, la procédure de réparation de la configuration du système est de restaurer les réglages initiales de la configuration du système à partir d'un système d'entrée/de sortie de base (BIOS); et
lorsque le mode poussoir est d'appuyer sur la touche de démarrage trois fois après avoir appuyé et maintenu la touche de démarrage pendant 3 secondes, la procédure de réparation de la configuration du système est d'écraser un programme BIOS;
où l'opération d'effacement des données de stockage CMOS comprend en outre
- le transfert d'un signal clair des données par l'intermédiaire d'un dispositif de contrôle fonctionnel à un dispositif de contrôle de connexion (204); et
- le transfert d'une tension de contrôle par l'intermédiaire d'un dispositif de contrôle de connexion (204) afin de déconnecter une broche pour sauvegarder les données (308) du stockage CMOS (203), et d'activer une broche pour l'élimination des données (309).

2. La méthode de réparation automatique des configurations du système utilisant un contrôle par l'intermédiaire d'une seule touche comme il a été mentionné à la demande 1, où le mode poussoir est une manière poussoir sélectionnée de n'importe quel nombre des poussoirs et les périodes des poussoirs de la touche de démarrage (201).

3. La méthode de réparation automatique des configurations du système utilisant un contrôle par l'intermédiaire d'une seule touche, comme il a été mentionné à la demande 1, où le nombre des poussoirs et les périodes des poussoirs sont détectées par un circuit de temporisation/de comptage (202).

4. La méthode de réparation automatique des configurations du système utilisant un contrôle par l'intermédiaire d'une seule touche, comme il a été mentionné à la demande 1, où l'opération de restauration des réglages initiaux de la configuration du système BIOS comprend:
- la capture des configurations initiales du système d'une position de stockage;
- l'écrasement des réglages actuels de la configuration du système avec les réglages initiaux de la configuration du système; et
- le redémarrage de l'ordinateur.

5. La méthode de réparation automatique des configurations du système utilisant un contrôle par l'intermédiaire d'une seule touche, comme il a été mentionné à la demande 1, où l'opération d'écrasement du programme BIOS comprend:
- la capture d'un programme BIOS initial d'une position de stockage;
- l'écrasement d'un programme BIOS actuel avec un programme BIOS initial; et
- le redémarrage de l'ordinateur.

6. La méthode de réparation automatique des configurations du système utilisant un contrôle par l'intermédiaire d'une seule touche, comme il a été mentionné à la demande 1, comprenant également la réalisation directe du processus de démarrage normale si l'article qui nécessite la réparation est dans l'incapacité d'être déterminé selon le mode poussoir de la touche de démarrage (201).
